# FASCICULE DE BREVET EUROPEEN

(11) **EP 4 293 248 B1**
(45) Date de publication et mention de la délivrance du brevet: **27.08.2025**
(21) Numéro de dépôt: 23179718.4
(22) Date de dépôt: 16.06.2023
(51) Int. Cl.: F16F 3/12

(54) **SUPPORT ANTIVIBRATOIRE ET VEHICULE COMPORTANT UN TEL SUPPORT ANTIVIBRATOIRE**
SCHWINGUNGSDÄMPFENDES LAGER UND FAHRZEUG MIT EINEM SOLCHEN SCHWINGUNGSDÄMPFER
ANTI-VIBRATION SUPPORT AND VEHICLE COMPRISING SUCH AN ANTI-VIBRATION SUPPORT

(30) Priorité: 17.06.2022 FR 2205966
(43) Date de publication de la demande: 20.12.2023
(73) Titulaire: HUTCHINSON, 75008 Paris (FR)
(72) Inventeur: BRISTOT, Pierre, 37510 BALLAN-MIRÉ (FR); AAZIZOU, Khalid, 28200 LA CHAPELLE DU NOYER (FR); JOLY, Jérôme, GRAND RAPIDS, 49505 (US); COUDIERE, Franck, 45190 CRAVANT (FR)
(74) Mandataire: Plasseraud IP

(56) Documents cités:
- EP-A1- 0 566 436
- EP-A2- 0 351 738
- EP-A2- 1 076 188
- WO-A1-2020/207636

## Description

### Domaine technique

La présente description est relative aux supports antivibratoires et aux véhicules comportant de tels supports antivibratoires.

### Technique antérieure

Le document WO2008152284A1 décrit un exemple d'un tel dispositif antivibratoire.

Par ailleurs, le document EP0351738A2, selon son abrégé, concerne un corps élastique annulaire en matériau composite fibreux destiné à supporter les vibrations d'ensembles d'entraînement et comprenant au moins un corps enroulé ayant une direction circonférentielle et une direction de chargement. Le ou les corps enroulés comprennent une pluralité de couches concentriques enroulées formées de fibres imprégnées de résine synthétique s'étendant dans la direction circonférentielle et transversalement à la direction de charge, et au moins une couche de fibres s'étendant selon un angle par rapport aux couches concentriques. Des éléments de fixation induisant une force sont disposés sur deux côtés opposés du ou des corps enroulés. Les éléments de fixation sont formés de supports métalliques entourant au moins en partie le ou les corps enroulés et de couches de caoutchouc élastique soutenant les supports métalliques contre le ou les corps enroulés.

### Résumé

La présente description a notamment pour but de proposer un support antivibratoire permettant un filtrage efficace des fréquences vibratoires élevées, notamment pour le support de moteurs électriques de véhicules ou de blocs moteurs mixtes de véhicules comportant un moteur à combustion interne et un moteur électrique.

A cet effet, la présente description propose un support antivibratoire selon la revendication 1.

Grâce à ces dispositions, on assure un filtrage efficace des vibrations de haute fréquence.

En particulier, on évite l'apparition de modes propres du support antivibratoire dans la plage 200 - 3000 Hz, ou tout au moins on les atténue fortement, contrairement aux supports antivibratoires dont l'élasticité et l'amortissement sont assurés tous deux par un corps en élastomère. Cet effet est atteint sans avoir besoin d'ajouter des masses battantes comme c'est le cas avec les corps en élastomère, d'où un gain de poids important.

Dans divers modes de réalisation du support antivibratoire, on peut éventuellement avoir recours en outre à l'une et/ou à l'autre des dispositions suivantes (seules ou dans toutes leurs combinaisons mutuelles) :
- ledit matériau amortissant présente un facteur d'amortissement supérieur à 10 % dans une plage de température de -30 °C à 90 °C et dans une plage de fréquences desdits mouvements vibratoires de 200 Hz à 3000 Hz ;
- ledit matériau élastique présente un facteur d'amortissement inférieur à 7 % dans ladite plage de température de -30 °C à 90 °C et dans ladite plage de fréquences desdits mouvements vibratoires de 200 Hz à 3000 Hz ;
- ledit matériau élastique a un module d'Young supérieur à 5 GPa ;
- ledit matériau élastique est choisi parmi :
   - un matériau métallique ayant un module d'Young supérieur à 100 GPa et un facteur d'amortissement inférieur à 0,2 % dans ladite plage de température de - 30 °C à 90 °C et dans ladite plage de fréquences desdits mouvements vibratoires de 200 Hz à 3000 Hz ;
   - un matériau thermoplastique ayant un module d'Young supérieur à 5 GPa et un facteur d'amortissement inférieur à 7 % dans ladite plage de température de -30 °C à 90 °C et dans ladite plage de fréquences desdits mouvements vibratoires de 200 à 3000 Hz ;
   - un matériau composite comprenant des fibres noyées dans une matrice de résine synthétique, ledit matériau composite ayant un module d'Young supérieur à 70 GPa et un facteur d'amortissement inférieur à 1 % dans ladite plage de température de - 30 °C à 90 °C et dans ladite plage de fréquences desdits mouvements vibratoires de 200 Hz à 3000 Hz ;
- ladite suspension permet des mouvements vibratoires relatifs de la première armature par rapport à la deuxième armature également selon une deuxième direction de vibration perpendiculaire à la première direction de vibration ;
- le matériau amortissant est surmoulé au moins partiellement sur ladite portion élastique ;
- le matériau amortissant surmoulé présente une épaisseur recouvrant ladite portion élastique, ladite épaisseur (e) étant inférieure à L/15, où L est une longueur de ladite portion élastique entre ladite première extrémité et ladite deuxième extrémité (l'épaisseur en question peut par exemple être de l'ordre de 1.5 à 3 mm) ;
- le matériau amortissant est surmoulé également sur au moins une partie de la première armature et / ou de la deuxième armature ;
- ladite portion élastique comporte un premier tronçon où le matériau amortissant surmoulant ladite portion élastique est solidaire de la première armature, un deuxième tronçon où le matériau amortissant surmoulant ladite portion élastique est libre et un troisième tronçon où le matériau amortissant surmoulant ladite portion élastique est solidaire de la deuxième armature, le matériau amortissant surmoulé présentant une épaisseur (e) recouvrant ledit deuxième tronçon de la portion élastique, ladite épaisseur (e) étant inférieure à L/30, où L est une longueur de ladite portion élastique entre ladite première extrémité et ladite deuxième extrémité ;
- la première extrémité de la portion élastique est solidaire d'un premier ancrage fixé à la première armature et la deuxième extrémité de la portion élastique est solidaire d'un deuxième ancrage fixé à la deuxième armature ;
- la première armature s'étend parallèlement à un axe central perpendiculaire à la première direction de vibration, la première armature comportant des rainures externes parallèles à l'axe central, la deuxième armature est annulaire et entoure ladite première armature et ledit axe central, la deuxième armature comportant des rainures internes parallèles à l'axe central, le premier ancrage est emboîté dans les rainures externes de la première armature, et le deuxième ancrage est emboîté dans les rainures internes de la deuxième armature ;
- ladite portion élastique est constituée dudit matériau élastique ;
- ladite portion élastique comporte deux lames élastiques parallèles constituées dudit matériau élastique, séparées par une couche dudit matériau amortissant qui adhère aux deux lames élastiques ;
- ladite couche dudit matériau amortissant présente une épaisseur inférieure à L/30, où L est une longueur de ladite portion élastique entre ladite première extrémité et ladite deuxième extrémité (l'épaisseur en question peut par exemple être de l'ordre de 1.5 à 3 mm) ;
- ladite portion élastique est déformable en flexion lorsque la deuxième armature se déplace relativement à la première armature au moins dans la première direction de vibration ;
- le deuxième élément est un bloc motopropulseur de véhicule ;

Par ailleurs, la présente description a également pour objet un véhicule comportant une caisse, un bloc motopropulseur et au moins un support antivibratoire tel que défini ci-dessus reliant la caisse au bloc motopropulseur.

Le bloc motopropulseur peut comporter au moins un moteur électrique.

Enfin, la présente description a encore pour objet un procédé de fabrication d'un support antivibratoire tel que défini ci-dessus dont la suspension comporte au moins une partie composite comprenant une matrice thermoplastique ou thermodurcissable renforcée de fibres, lesdites fibres étant enroulées entre des éléments de renvoi et mises en tension, ledit procédé comprenant la réalisation d'une structure de fibres, pré-imprégnées ou non, au travers des opérations suivantes :
- aligner et juxtaposer les fibres , tout en les tendant entre des éléments de renvoi, et en les maintenant écartées les unes des autres, de façon à obtenir une première couche,
- superposer à ladite première couche, une deuxième couche obtenue de manière identique à la première, où les fibres sont parallèles à celles de la première couche, et maintenues écartées desdites fibres de la première couche,
- répéter l'opération de superposition jusqu'à obtenir l'épaisseur souhaitée.

### Brève description des dessins

D'autres caractéristiques et avantages du support antivibratoire apparaîtront au cours de la description suivante de deux de ses formes de réalisation, données à titre d'exemples non limitatifs, en regard des dessins joints.

Sur les dessins :
[Fig. 1] La figure 1 est un schéma de principe montrant un véhicule dont le bloc motopropulseur peut être supporté notamment par un ou des supports antivibratoires selon la présente description.
[Fig. 2] La figure 2 est une vue en perspective d'un bloc motopropulseur de véhicule relié à la caisse du véhicule par des supports antivibratoires selon la présente description.
[Fig. 3] La figure 3 est une vue en perspective d'un support antivibratoire selon une première forme de réalisation.
[Fig. 4] La figure 4 est une vue similaire à la figure 3, vue d'arrière.
[Fig. 5] La figure 5 est une vue similaire à la figure 4, partiellement éclatée.
[Fig. 6] La figure 6 est une vue en coupe transversale du support antivibratoire de la figure 3.
[Fig. 7] La figure 7 est une vue en perspective du support antivibratoire de la figure 3, sans le matériau amortissant surmoulé.
[Fig. 8] La figure 8 est une vue en perspective similaire à la figure 3, dans une deuxième forme de réalisation.
[Fig. 9] La figure 9 est une vue similaire à la figure 8, vue d'arrière.
[Fig. 10] La figure 10 est une vue de face du support antivibratoire de la figure 8.
[Fig. 11] La figure 11 est une vue d'avant du support antivibratoire, localement coupée, dans une troisième forme de réalisation.
[Fig. 12] La figure 12 est une vue en perspective du support antivibratoire de la figure 11, sans le matériau amortissant surmoulé.
[Fig. 13] La figure 13 est une vue similaire à la figure 12, vue en direction opposée.
[Fig. 14] La figure 14 est une vue éclatée du support antivibratoire de la figure 11, sans le matériau amortissant surmoulé.
[Fig. 15] La figure 15 est une vue en coupe transversale et en perspective d'un support antivibratoire selon une quatrième forme de réalisation.

### Description plus détaillée

Sur les différentes figures, les mêmes références désignent des éléments identiques ou similaires.

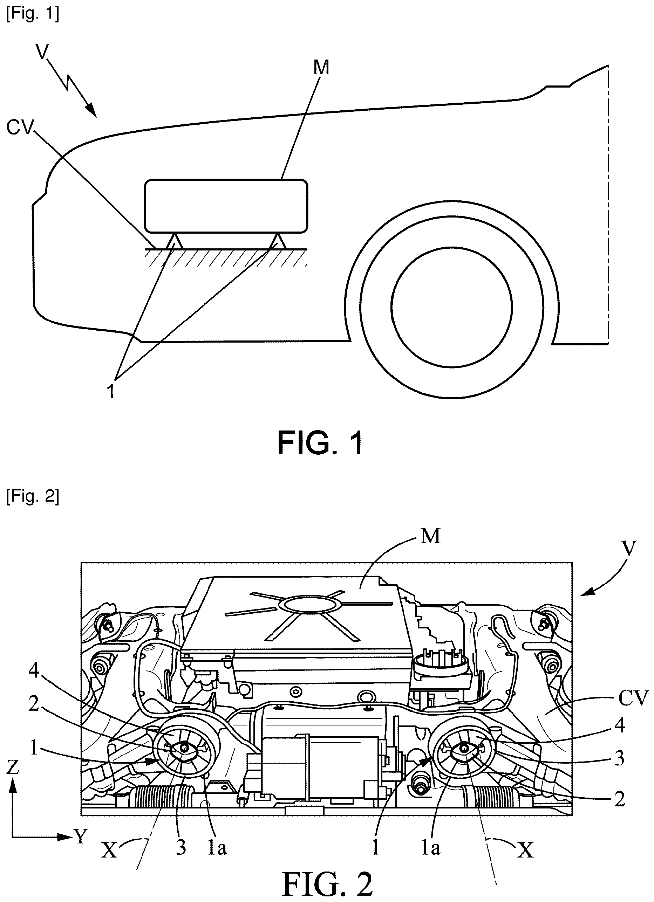

La figure 1 montre très schématiquement un véhicule V, notamment un véhicule automobile, comportant une caisse CV (ou un châssis) et un bloc motopropulseur M relié à la caisse CV par un ou plusieurs supports antivibratoires 1, dont au moins un correspond à la présente description.

Le bloc motopropulseur M peut notamment être un bloc moteur électrique, ou le cas échéant un bloc moteur hybride comprenant un moteur à combustion interne et un moteur électrique utilisés pour la propulsion du véhicule. Dans les deux cas, le fonctionnement du moteur électrique génère des vibrations de relativement haute fréquence, typiquement supérieures à 600 Hz ou plus généralement dans la plage de 200 Hz à 3000 Hz.

Comme représenté sur la figure 2, le ou les supports antivibratoires 1 peuvent se présenter sous forme de manchon centré sur un axe X, par exemple sensiblement horizontal. Chaque support antivibratoire 1 en forme de manchon peut être emboîté dans un logement 1a solidaire de la caisse CV.

D'une façon générale, la présente description propose un support antivibratoire 1 adapté pour filtrer et amortir des vibrations entre un premier élément et un deuxième élément (par exemple constitués l'un par le bloc motopropulseur M et l'autre par la caisse CV du véhicule) principalement selon une première direction de vibration Z, ledit support antivibratoire 1 comportant :
- une première armature 2 (par exemple métallique, ou autre) adaptée pour être fixée au premier élément,
- une deuxième armature 3 (par exemple moulée en résine synthétique, ou autre) adaptée pour être fixée au deuxième élément,
- une suspension 4 reliant la première armature à la deuxième armature.

La première armature 2 s'étend parallèlement à l'axe central X tandis que la deuxième armature 3 est annulaire et entoure ladite première armature 2 et ledit axe central X, la deuxième armature 3 pouvant être par exemple emboîtée dans le logement 1a décrit précédemment.

La suspension 4 est adaptée pour permettre et amortir des mouvements vibratoires relatifs entre la deuxième armature 3 et la première armature 2 au moins selon la première direction de vibration Z.

La suspension 4 est adaptée pour supporter une charge, par exemple le poids du deuxième élément (par exemple le bloc motopropulseur M) et / ou une charge de reprise de couple moteur selon la première direction de vibration Z. La direction Z peut être verticale comme dans l'exemple représenté, mais elle peut être orientée différemment. Par exemple, la direction Z peut éventuellement être horizontale lorsque la charge supportée par la suspension 4 est une charge de reprise de couple moteur.

La suspension 4 peut aussi être adaptée pour permettre et amortir des mouvements vibratoires relatifs entre la deuxième armature 3 et la première armature 2 selon une deuxième direction de vibration Y perpendiculaire à l'axe X et à la première direction de vibration Z.

Selon la présente description, la suspension 4 est un ensemble composite comportant un matériau élastique associé avec un matériau amortissant. Ledit matériau élastique est un matériau non amortissant ou faiblement amortissant, qui détermine une raideur statique de la suspension, ledit matériau élastique étant adapté pour supporter la charge susmentionnée.

Le matériau amortissant est adapté pour amortir les modes propres potentiellement excités par lesdits mouvements vibratoires.

Le matériau amortissant peut être un matériau viscoélastique tel qu'un élastomère. Par exemple, le matériau amortissant peut être un élastomère à base de silicone, notamment le matériau commercialisé par la société Hutchinson sous la marque Delta One ^{®}, ou encore un élastomère à base de caoutchouc, notamment le matériau commercialisé par la société Hutchinson sous la marque Deltane ^{®}.

Le matériau amortissant peut présenter un facteur d'amortissement (tangente delta) supérieur à 10 % dans une plage de température de -30 °C à 90 °C et dans une plage de fréquences desdits mouvements vibratoires de 200 Hz à 3000 Hz.

Le matériau élastique peut présenter un facteur d'amortissement inférieur à 7 % dans ladite plage de température de -30 °C à 90 °C et dans ladite plage de fréquences desdits mouvements vibratoires de 200 Hz à 3000 Hz. Ledit matériau élastique peut avoir un module d'Young supérieur à 5 GPa. Les valeurs de module d'Young données dans la présente description sont mesurées à une température ambiante de 20 °C et avec une hygrométrie nulle ou sensiblement nulle.

Selon un premier exemple, le matériau élastique peut être un matériau métallique (notamment un acier) ayant un module d'Young supérieur à 100 GPa, et un facteur d'amortissement inférieur à 0,2 % dans ladite plage de température de - 30 °C à 90 °C et dans ladite plage de fréquences desdits mouvements vibratoires de 200 Hz à 3000 Hz.

Selon un deuxième exemple, le matériau élastique peut être un matériau thermoplastique (notamment PA6, PA6/6 ou autre) ayant un module d'Young supérieur à 5 GPa, et un facteur d'amortissement inférieur à 7 % dans ladite plage de température de -30 °C à 90 °C et dans ladite plage de fréquences desdits mouvements vibratoires de 200 à 3000 Hz. Le matériau thermoplastique peut comporter une charge, par exemple constituée par des fibres courtes de verre, de carbone ou de basalte.

Selon un troisième exemple, le matériau élastique peut être un matériau composite comprenant des fibres (en particulier des fibres continues, notamment des fibres de verre, de carbone ou de basalte) noyées dans une matrice de résine synthétique, ledit matériau composite ayant un module d'Young supérieur à 70 GPa, et un facteur d'amortissement inférieur à 1 % dans ladite plage de température de - 30 °C à 90 °C et dans ladite plage de fréquences desdits mouvements vibratoires de 200 Hz à 3000 Hz. La matrice de résine synthétique peut être un matériau thermoplastique (notamment PA6, PA6/6 ou autre) ou un matériau thermodurcissable (notamment époxy ou autre)

La suspension présente une raideur dynamique comprise entre 400 N/mm et 800 N/mm (mesurée sous accélération constante appliquée à la première armature, par exemple 3 g) vis-à-vis desdits mouvements vibratoires selon la première direction de vibration, dans une plage de fréquences desdits mouvements vibratoires de 200 Hz à 3000 Hz.

Ce résultat est obtenu du fait que le support antivibratoire 1 comporte une relativement faible masse de matériau amortissant (moins de 20 % de la masse totale du support antivibratoire 1), puisque le matériau amortissant n'est pas ou quasiment pas utilisé pour obtenir la raideur statique désirée du support antivibratoire, cette fonction étant assurée par le matériau élastique. De ce fait, on élimine ou on réduit fortement les modes propres de la suspension 4 dans toute la plage 200 Hz - 3000 Hz. On assure donc un filtrage efficace des vibrations de haute fréquence.

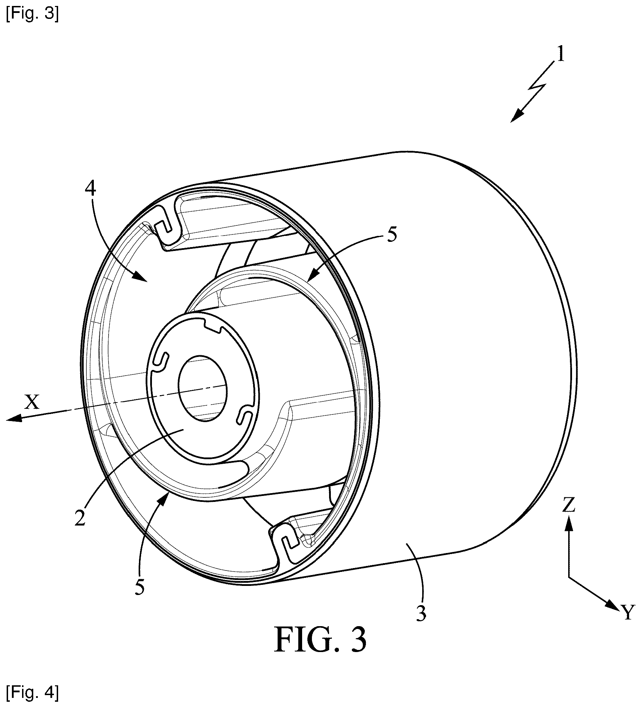

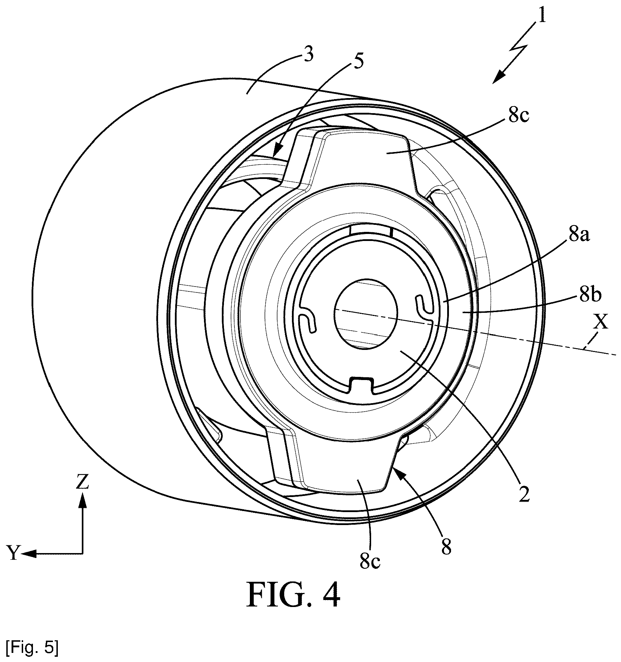

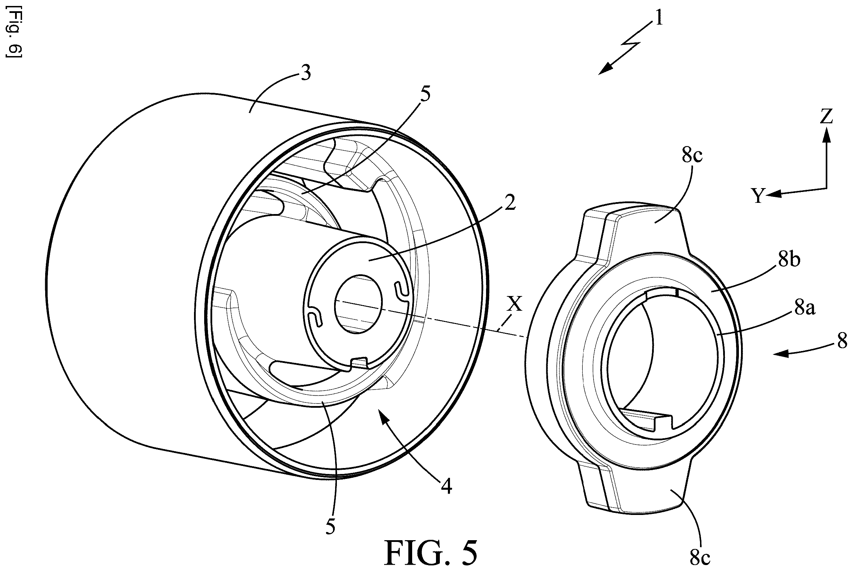

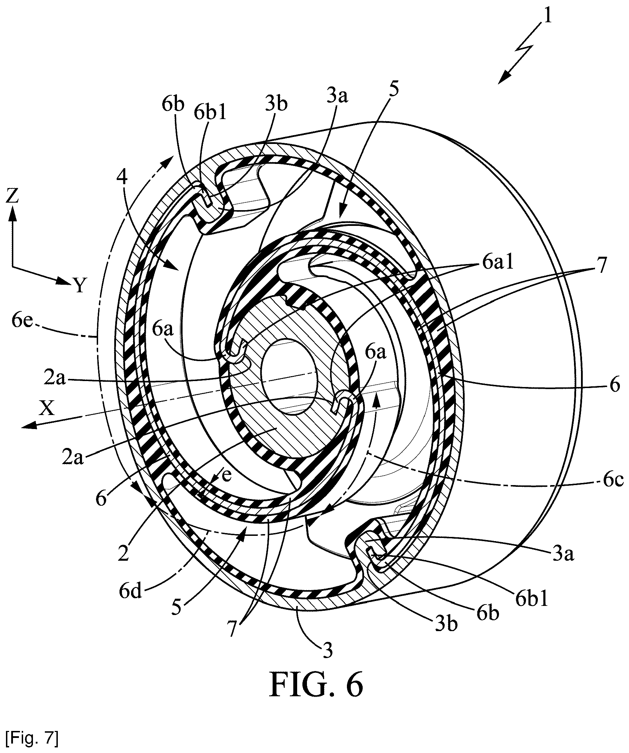

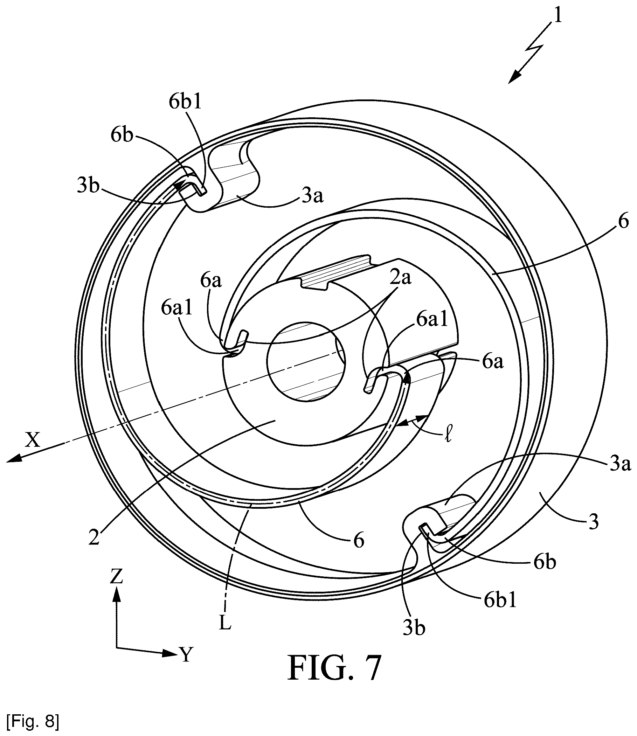

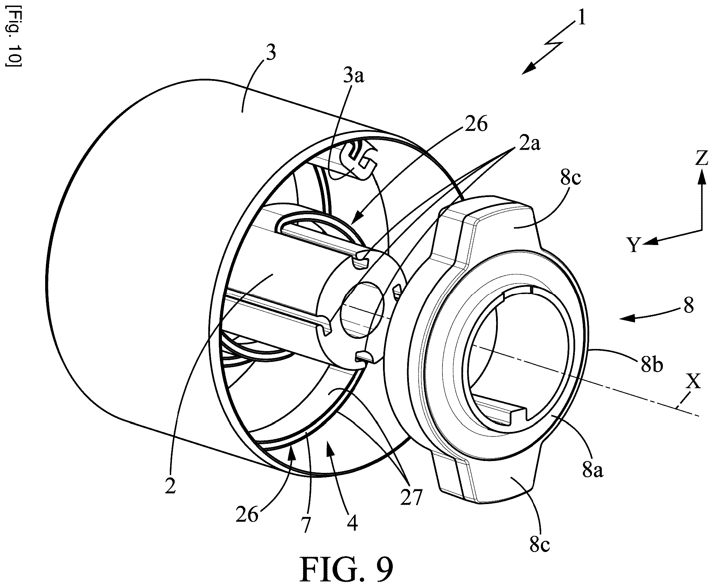

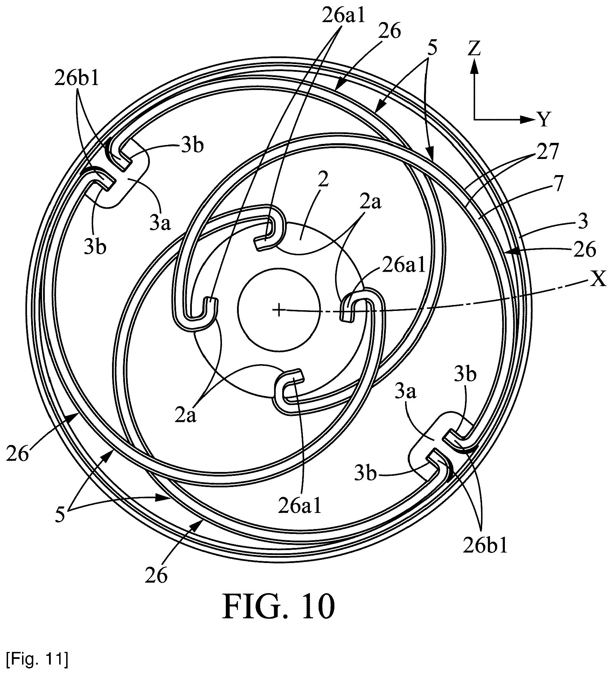

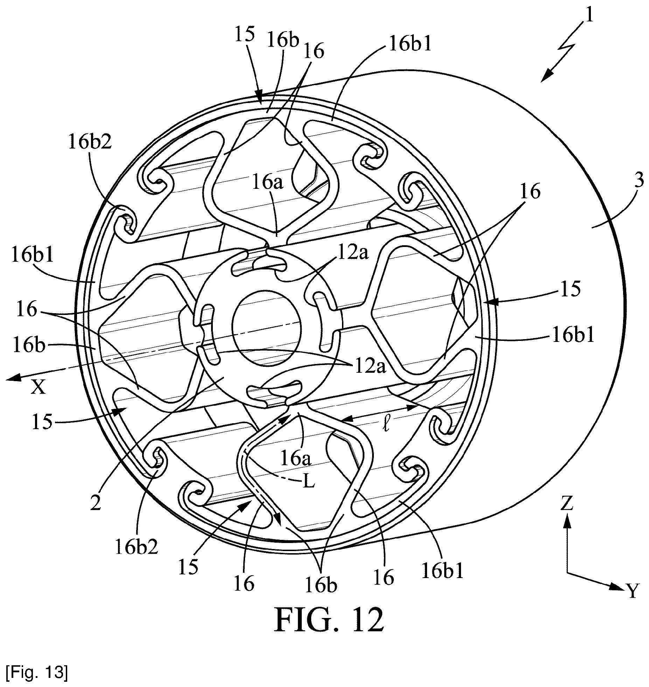

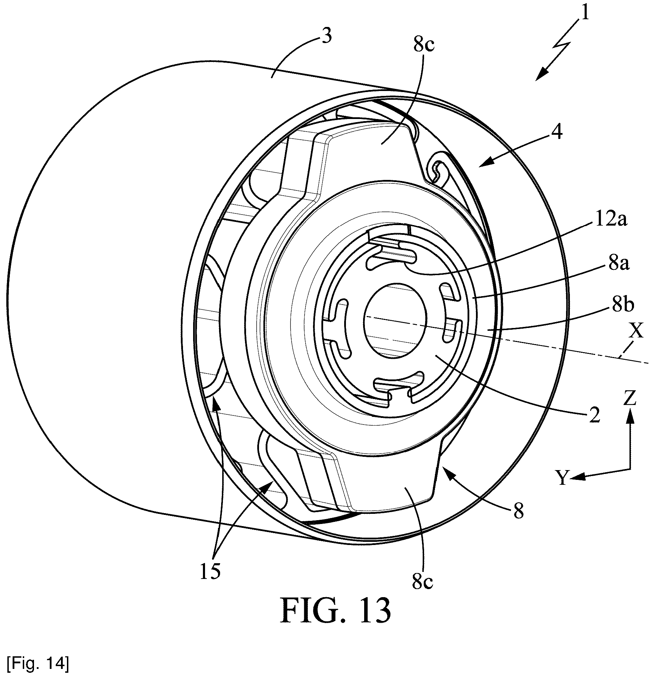

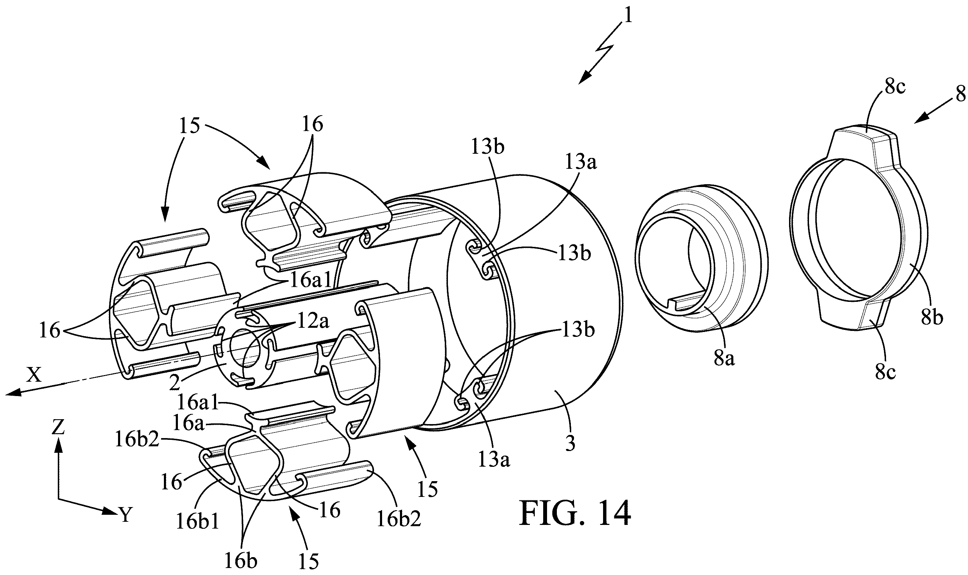

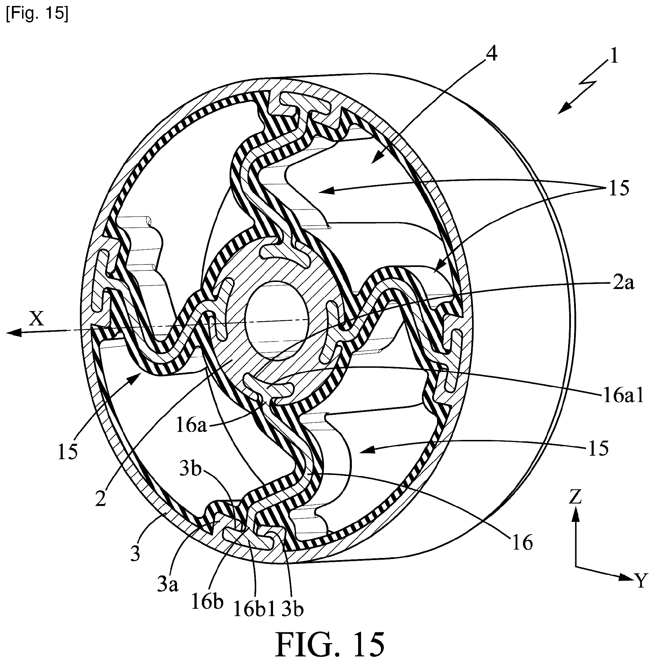

Dans les différentes formes de réalisation décrites ci-après en références aux figures 3-15, la suspension comporte plusieurs organes de suspension 5 ; 15, ayant au moins une portion élastique 6 ; 16 ; 26 comportant ledit matériau élastique, ladite portion élastique s'étendant entre une première extrémité reliée à la première armature et une deuxième extrémité reliée à la deuxième armature. Les organes de suspension 5 ; 15 sont angulairement répartis autour de l'axe central X. Ladite portion élastique 6 ; 16 ; 26 est déformable en flexion lorsque la première armature se déplace relativement à la deuxième armature au moins dans la première direction de vibration Z et / ou dans la deuxième direction de vibration Y.

### Première forme de réalisation

Dans la première forme de réalisation, représentée sur les figures 3 à 7, le support antivibratoire comporte par exemple deux organes de suspension 5 disposés sensiblement à 180 degrés l'un de l'autre autour de l'axe central X, ou éventuellement plus de deux organes de suspension 5. La portion élastique 6 de chaque organe de suspension 5 peut être disposée de façon à s'étendre sensiblement selon une spirale entre la première extrémité 6a et la deuxième extrémité 6b de ladite portion élastique, ladite portion élastique 6 présentant une largeur / parallèle à l'axe central X.

Dans la première forme de réalisation, chaque organe de suspension 5 peut comporter par exemple une seule portion élastique 6 et chaque portion élastique 6 peut être par exemple entièrement constituée dudit matériau élastique, et peut se présenter sous forme d'une languette ou lame élastique.

La première extrémité 6a de la portion élastique 6 peut comporter un premier ancrage 6a1 fixé à la première armature 2 et la deuxième extrémité 6b de la portion élastique 6 peut comporter un deuxième ancrage 6b1 fixé à la deuxième armature 3. Les ancrages 6a1, 6b1 peuvent être par exemple des rebords de la portion élastique 6, faisant un angle par exemple de l'ordre de 90 degrés avec le reste de la portion élastique 6.

La première armature 2 peut comporter par exemple des rainures en L ouvertes radialement vers l'extérieur et s'étendant parallèlement à l'axe central X, dans lesquelles peuvent se glisser respectivement les ancrages 6a1 des portions élastiques 6, par emboîtement parallèlement à l'axe X. La deuxième armature 3 peut comporter des rainures internes 3b parallèles à l'axe central X dans lesquelles peuvent se glisser respectivement les ancrages 6b1 des portions élastiques 6, par emboîtement parallèlement à l'axe X. Dans l'exemple représenté, les rainures 3b peuvent être réalisées dans des nervures internes 3a de la deuxième armature 3, chaque nervure interne 3a ayant une section en forme de crochet qui délimite intérieurement le rainure 3b, laquelle débouche au voisinage de la surface cylindrique interne de la deuxième armature 3.

Le matériau amortissant 7 peut être surmoulé sur chaque portion élastique 6. Le matériau amortissant 7 peut être éventuellement surmoulé également sur au moins une partie de la première armature 2 et / ou de la deuxième armature 3, notamment sur la face radialement externe de la première armature 2 et / ou sur la face radialement interne de la deuxième armature 3.

Le matériau amortissant 7 surmoulé peut présenter une épaisseur e recouvrant ladite portion élastique 6, ladite épaisseur e étant inférieure à L/15, où L est la longueur de ladite portion élastique 6 entre ladite première extrémité 6a et ladite deuxième extrémité 6b.

Dans l'exemple représenté, la portion élastique 6 comporte un premier tronçon 6c où le matériau amortissant 7 surmoulant ladite portion élastique 6 est solidaire de la première armature 2, un deuxième tronçon 6d où le matériau amortissant 7 surmoulant ladite portion élastique 6 est libre et un troisième tronçon 6e où le matériau amortissant 7 surmoulant ladite portion élastique 6 est solidaire de la deuxième armature 3. L'épaisseur e du matériau amortissant 7 recouvrant ledit deuxième tronçon 6d de la portion élastique 6 peut être inférieure à L/30.

L'épaisseur e peut par exemple être de l'ordre de 1.5 à 3 mm.

Le support antivibratoire 1 peut en outre comporter un organe limiteur 8 pour limiter les débattements selon la première direction de vibration Z. L'organe limiteur 8 peut par exemple comporter une bague 8a emboîtée sur une extrémité de la première armature 2 et une garniture externe 8b en élastomère, comportant par exemple des bossages 8c adaptés pour buter contre la surface interne de la deuxième armature 3.

### Deuxième forme de réalisation

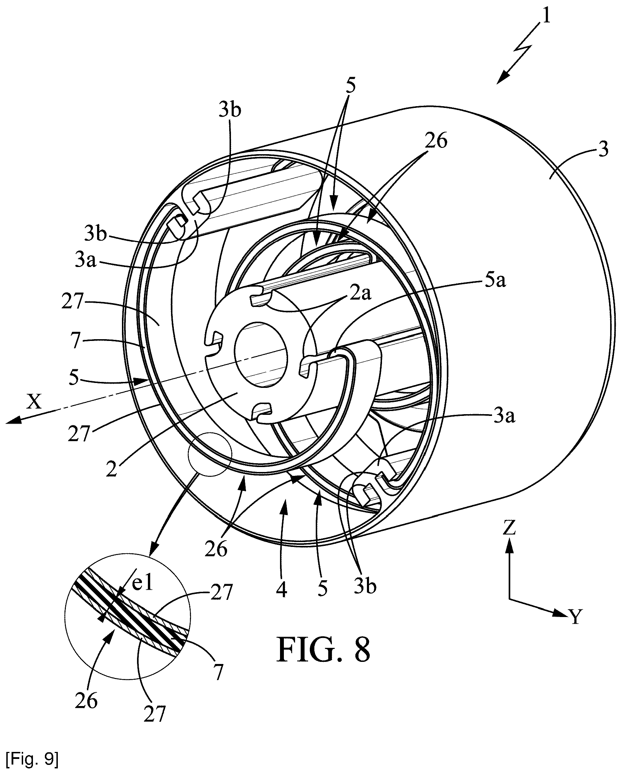

Dans la deuxième forme de réalisation, représentée sur les figures 8 à 10, les portions élastiques 26 peuvent être de forme en spirale similaire à la première forme de réalisation. Les portions élastiques 26 peuvent être par exemple au nombre de 4, disposés par exemple à 90 degrés les uns des autres autour de l'axe central X. Les portions élastiques 26 peuvent éventuellement être disposés par paires d'organes élastiques diamétralement opposés, les portions élastiques 26 d'une paire étant orientés de façon que leur forme en spirale s'étende dans un sens angulaire depuis la première extrémité 26a jusqu'à la deuxième extrémité 26b, tandis que les portions élastiques 26 de l'autre paire sont orientées de façon que leur forme en spirale s'étende dans le sens angulaire opposé depuis la première extrémité 26a jusqu'à la deuxième extrémité 26b.

La fixation des première et deuxième extrémités 26a, 26b de chaque portion élastique 26 respectivement aux première et deuxième armatures 2, 3 peut être réalisée par exemple comme dans la première forme de réalisation, avec des ancrages 26a1, 26b1 emboîtés respectivement dans des rainures 2a, 3b des première et deuxième armatures 2, 3.

Dans cette troisième forme de réalisation, les portions élastiques 26 peuvent comporter chacun deux lames élastiques 27 parallèles constituées dudit matériau élastique, séparées par une couche dudit matériau amortissant 7 qui adhère aux deux lames élastiques 27.

Plus généralement, il pourrait y avoir un nombre N de lames élastiques 27 séparées respectivement par un nombre N-1 de couches de matériau amortissant 7, N étant un nombre entier au moins égal à 2.

Ladite couche dudit matériau amortissant 7 peut présenter une épaisseur e1 inférieure à L/30, où L est la longueur de ladite portion élastique 26 entre ladite première extrémité 26a et ladite deuxième extrémité 26b. L'épaisseur e& peut par exemple être comprise entre 1,5 et 3 mm.

Cette structure en sandwich de la portion élastique est possible pour toutes les formes de la suspension 4.

Dans cette deuxième forme de réalisation, les portions élastiques 26 n'ont pas nécessairement besoin d'être surmoulées de matériau amortissant 7, bien que cette possibilité ne soit pas exclue.

Le support antivibratoire 1 peut comporter un organe limiteur 8 comme dans la première forme de réalisation. Plus généralement, tout ce qui a été décrit pour la première forme de réalisation et qui n'est pas contredit par ce qui précède, est applicable à la deuxième forme de réalisation.

Dans cette deuxième forme de réalisation, le support antivibratoire peut être particulièrement léger. En particulier, la masse de matériau amortissant 7 peut être réduite, puisque ce matériau travaille en cisaillement de façon très efficace pour l'amortissement. La masse de matériau amortissant 7 peut être par exemple inférieure à 5 % de la masse totale du support antivibratoire 1.

### Troisième forme de réalisation

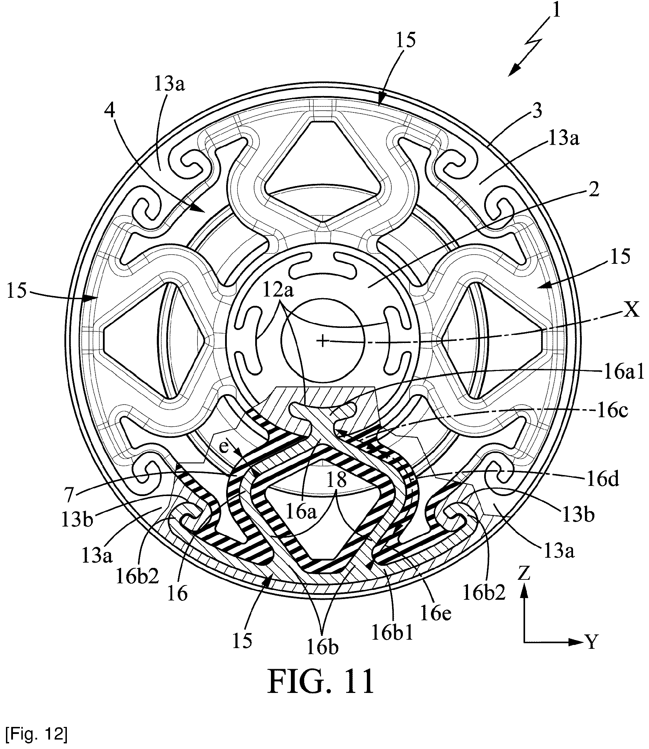

Dans la troisième forme de réalisation, représentée sur les figures 11 à 14, le support antivibratoire comporte par exemple 4 organes de suspension 15 disposés sensiblement à 90 degrés l'un de l'autre autour de l'axe central X, ou éventuellement un nombre différent d'organes de suspension 15.

Chaque organe de suspension 15 peut comporter une paire de portions élastiques 16 en forme de languettes ou lames élastiques, chacune entièrement formée de matériau élastique. Les premières extrémités 16a des deux portions élastiques 16 de chaque organe de suspension 15 sont solidaires l'une de l'autre et les deuxièmes extrémités 16b des deux portions élastiques 16 sont solidaires l'une de l'autre. La largeur *l* de chaque portion élastique 16 est parallèle à l'axe central X et les deux portions élastiques 16 sont galbées en s'écartant l'une de l'autre entre les première et deuxième extrémités, de façon à travailler en flexion.

La première extrémité 16a de la paire de portions élastiques 16 peut comporter un premier ancrage 16a1 fixé à la première armature 2 et la deuxième extrémité 16b de la paire de portions élastiques 16 peut comporter un deuxième ancrage 16b1 fixé à la deuxième armature 3.

Dans l'exemple représenté, les ancrages 16a1, 16b1 peuvent comporter des portions de parois cylindriques centrées sur l'axe X, qui se glissent par emboîtement selon l'axe X dans des rainures complémentaires 12a, 13b formées respectivement dans la surface extérieure de la première armature 2 et dans la surface intérieure de la deuxième armature 3. Dans l'exemple représenté, l'ancrage 16a1 est une nervure en T reçue dans une rainure 12a en T de la première armature 2, et l'ancrage 16b1 comporte des rebords latéraux 16b2 qui s'engagent dans les rainures 13b, lesquelles peuvent être formées dans des nervures 13a faisant saillie vers l'intérieur de la deuxième armature 3, de façon similaire à la première forme de réalisation.

Le matériau amortissant 7 peut être surmoulé sur chaque portion élastique 16. Le matériau amortissant 7 peut être éventuellement surmoulé également sur au moins une partie de la première armature 2 et / ou de la deuxième armature 3, notamment sur la face radialement externe de la première armature 2 et /ou sur la face radialement interne de la deuxième armature 3.

Le matériau amortissant 7 surmoulé peut présenter une épaisseur e recouvrant ladite portion élastique 16, ladite épaisseur e étant inférieure à L/15, où L est la longueur de ladite portion élastique 6 entre ladite première extrémité et ladite deuxième extrémité.

Dans l'exemple représenté, chaque portion élastique 16 comporte un premier tronçon 16c où le matériau amortissant 7 surmoulant ladite portion élastique 16 est solidaire de la première armature 2, un deuxième tronçon 16d où le matériau amortissant 7 surmoulant ladite portion élastique 16 est libre et un troisième tronçon 16e où le matériau amortissant 7 surmoulant ladite portion élastique 6 est solidaire de la deuxième armature 3. L'épaisseur e du matériau amortissant 7 recouvrant ledit deuxième tronçon 16d de la portion élastique peut être inférieure à L/30.

L'épaisseur e peut par exemple être comprise entre 1.5 et 3 mm.

Le support antivibratoire 1 peut en outre comporter un organe limiteur 8 similaire à celui de la première forme de réalisation.

### Quatrième forme de réalisation

La quatrième forme de réalisation est similaire à la troisième forme de réalisation et ne sera donc pas décrite à nouveau ici. Elle se distingue de la troisième forme de réalisation en ce que :
- chaque organe de suspension 15 comporte une seule portion élastique 16 ;
- le deuxième ancrage 13b1 est en forme de T et la rainure 3b est également en forme de T.

### Modes de fabrication

Tout ou partie de la suspension 4 du support antivibratoire 1 peut par exemple être obtenu par impression 3D (ou plus généralement par fabrication additive).

Un autre procédé de fabrication connu est décrit dans le document WO2019234625A1.

Dans ce cas, la suspension 4 peut comporter au moins une partie composite comprenant une matrice thermoplastique ou thermodurcissable renforcée de fibres, lesdites fibres étant enroulées entre des éléments de renvoi et mises en tension, cette partie composite étant fabriquée par un procédé comprenant la réalisation d'une structure de fibres, pré-imprégnées ou non, au travers des opérations suivantes :
- aligner et juxtaposer les fibres , tout en les tendant entre des éléments de renvoi, et en les maintenant écartées les unes des autres, en sorte d'obtenir une première couche,
- superposer à ladite première couche, une deuxième couche obtenue de manière identique à la première, où les fibres sont parallèles à celles de la première couche, et maintenues écartées de celle- ci,
- répéter l'opération de superposition jusqu'à obtenir l'épaisseur souhaitée.

## Revendications

1. Support antivibratoire (1) adapté pour filtrer et amortir des vibrations entre un premier élément (M) et un deuxième élément (CV), ledit support antivibratoire (1) comportant :
- une première armature (2) adaptée pour être fixée au premier élément (M), la première armature (2) s'étendant parallèlement à un axe central (X),
- une deuxième armature (3) adaptée pour être fixée au deuxième élément (CV), la deuxième armature (3) étant annulaire et entourant ladite première armature (2) et ledit axe central (X),
- une suspension (4) reliant la première armature (2) à la deuxième armature (3), ladite suspension (4) étant un ensemble composite comportant un matériau élastique associé avec un matériau amortissant (7), ladite suspension (4) permettant des mouvements vibratoires relatifs de la première armature (2) par rapport à la deuxième armature (3) au moins selon une première direction de vibration (Z) perpendiculaire à l'axe central (X),
dans lequel ledit matériau élastique est un matériau non amortissant ou faiblement amortissant et détermine une raideur statique de la suspension,
dans lequel le matériau amortissant (7) est adapté pour amortir des modes propres potentiellement excités par lesdits mouvements vibratoires,
dans lequel la suspension (4) présente une raideur dynamique comprise entre 400 N/mm et 800 N/mm vis-à-vis desdits mouvements vibratoires selon la première direction de vibration (Z), dans une plage de fréquences desdits mouvements vibratoires de 200 Hz à 3000 Hz,
dans lequel ledit matériau amortissant (7) présente une masse inférieure à 20 % d'une masse totale du support antivibratoire (1),
dans lequel la suspension (4) comporte plusieurs organes de suspension (5 ; 15) angulairement répartis autour de l'axe central (X), chaque organe de suspension (5 ; 15) ayant au moins une portion élastique (6 ; 26 ; 16 ) comportant ledit matériau élastique et présentant une largeur (*l*) parallèle à l'axe central (X), ladite portion élastique (6 ; 26 ; 16) s'étendant entre une première extrémité (6a ; 26a ; 16a) reliée à la première armature (2) et une deuxième extrémité (6b ; 26b ; 16b) reliée à la deuxième armature (3),
et dans lequel chaque organe de suspension (5 ; 15) comporte :
A - soit une seule portion élastique (6 ; 26) en forme de languette et la portion élastique (6 ; 26) de chaque organe de suspension étant disposée de façon à s'étendre sensiblement selon une spirale entre la première extrémité (6a ; 26a) et la deuxième extrémité (6b ; 26b) de ladite portion élastique (6 ; 26),
B - soit une seule portion élastique (16) en forme de languette et la portion élastique (16) de chaque organe de suspension étant galbée entre les première et deuxième extrémités (16a, 16b),
C - soit deux portions élastiques (16) en forme de languettes, les premières extrémités (16a) des deux portions élastiques étant solidaires l'une de l'autre et les deuxièmes extrémités (16b) des deux portions élastiques étant solidaires l'une de l'autre, les deux portions élastiques (16) étant galbées en s'écartant l'une de l'autre entre les première et deuxième extrémités (16a, 16b).

2. Support antivibratoire (1) selon la revendication 1, dans lequel ledit matériau amortissant (7) présente un facteur d'amortissement supérieur à 10 % dans une plage de température de -30 °C à 90 °C et dans une plage de fréquences desdits mouvements vibratoires de 200 Hz à 3000 Hz.

3. Support antivibratoire (1) selon l'une quelconque des revendications précédentes, dans lequel ledit matériau élastique présente un facteur d'amortissement inférieur à 7 % dans ladite plage de température de -30 °C à 90 °C et dans ladite plage de fréquences desdits mouvements vibratoires de 200 Hz à 3000 Hz.

4. Support antivibratoire (1) selon l'une quelconque des revendications précédentes, dans lequel ledit matériau élastique a un module d'Young supérieur à 5 GPa.

5. Support antivibratoire (1) selon l'une quelconque des revendications précédentes, dans lequel ledit matériau élastique est choisi parmi :
- un matériau métallique ayant un module d'Young supérieur à 100 GPa et un facteur d'amortissement inférieur à 0,2 % dans ladite plage de température de - 30 °C à 90 °C et dans ladite plage de fréquences desdits mouvements vibratoires de 200 Hz à 3000 Hz ;
- un matériau thermoplastique ayant un module d'Young supérieur à 5 GPa et un facteur d'amortissement inférieur à 7 % dans ladite plage de température de -30 °C à 90 °C et dans ladite plage de fréquences desdits mouvements vibratoires de 200 à 3000 Hz ;
- un matériau composite comprenant des fibres noyées dans une matrice de résine synthétique, ledit matériau composite ayant un module d'Young supérieur à 70 GPa et un facteur d'amortissement inférieur à 1 % dans ladite plage de température de - 30 °C à 90 °C et dans ladite plage de fréquences desdits mouvements vibratoires de 200 Hz à 3000 Hz.

6. Support antivibratoire (1) selon l'une quelconque des revendications précédentes, dans lequel le matériau amortissant (7) est surmoulé au moins partiellement sur ladite portion élastique.

7. Support antivibratoire (1) selon la revendication 6, dans lequel le matériau amortissant (7) surmoulé présente une épaisseur (e) recouvrant ladite portion élastique (6 ; 16), ladite épaisseur (e) étant inférieure à L/15, où L est une longueur de ladite portion élastique (6 ; 16) entre ladite première extrémité (6a ; 16a) et ladite deuxième extrémité (6b ; 16b).

8. Support antivibratoire (1) selon la revendication 6 ou la revendication 7, dans lequel le matériau amortissant (7) est surmoulé également sur au moins une partie de la première armature (2) et / ou de la deuxième armature (3).

9. Support antivibratoire (1) selon la revendication 8, dans lequel ladite portion élastique (6 ; 16) comporte un premier tronçon (6c ; 16c) où le matériau amortissant (7) surmoulant ladite portion élastique est solidaire de la première armature (2), un deuxième tronçon (6d ; 16d) où le matériau amortissant surmoulant ladite portion élastique est libre et un troisième tronçon (6e ; 16e) où le matériau amortissant surmoulant ladite portion élastique est solidaire de la deuxième armature (3), le matériau amortissant (7) surmoulé présentant une épaisseur (e) recouvrant ledit deuxième tronçon (6d ; 16d) de la portion élastique, ladite épaisseur (e) étant inférieure à L/30, où L est une longueur de ladite portion élastique (6 ; 16) entre ladite première extrémité (6a ; 16a) et ladite deuxième extrémité (6b ; 16b).

10. Support antivibratoire (1) selon l'une quelconque des revendications précédentes, dans lequel ladite portion élastique (6 ; 16) est constituée dudit matériau élastique.

11. Support antivibratoire (1) selon l'une quelconque des revendications 1 à 9, dans lequel ladite portion élastique (26) comporte deux lames élastiques (27) parallèles constituées dudit matériau élastique, séparées par une couche dudit matériau amortissant (7) qui adhère aux deux lames élastiques (27).

12. Support antivibratoire (1) selon la revendication 11, dans lequel ladite couche dudit matériau amortissant (7) présente une épaisseur (e1) inférieure à L/30, où L est une longueur de ladite portion élastique entre ladite première extrémité et ladite deuxième extrémité.

13. Véhicule comportant une caisse (CV), un bloc motopropulseur (M) et au moins un support antivibratoire (1) selon l'une quelconque des revendications précédentes reliant la caisse (CV) au bloc motopropulseur (M).

14. Véhicule selon la revendication 13, dans lequel le bloc motopropulseur (M) comporte au moins un moteur électrique.

15. Procédé de fabrication d'un support antivibratoire (1) selon l'une quelconque des revendications 1 à 12 dont la suspension (4) comporte au moins une partie composite comprenant une matrice thermoplastique ou thermodurcissable renforcée de fibres, lesdites fibres étant enroulées entre des éléments de renvoi et mises en tension, ledit procédé comprenant la réalisation d'une structure de fibres, pré-imprégnées ou non, au travers des opérations suivantes :
- aligner et juxtaposer les fibres , tout en les tendant entre des éléments de renvoi, et en les maintenant écartées les unes des autres, de façon à obtenir une première couche,
- superposer à ladite première couche, une deuxième couche obtenue de manière identique à la première, où les fibres sont parallèles à celles de la première couche, et maintenues écartées desdites fibres de la première couche,
- répéter l'opération de superposition jusqu'à obtenir l'épaisseur souhaitée.

## Patentansprüche

1. Schwingungsdämpfende Stütze (1), die zum Filtern und Dämpfen von Schwingungen zwischen einem ersten Element (M) und einem zweiten Element (CV) geeignet ist,
wobei die schwingungsdämpfende Stütze (1) umfasst:
- eine erste Armatur (2), die zur Befestigung an dem ersten Element (M) geeignet ist, wobei sich die erste Armatur (2) parallel zu einer Mittelachse (X) erstreckt,
- eine zweite Armatur (3), die zur Befestigung an dem zweiten Element (CV) geeignet ist, wobei die zweite Armatur (3) ringförmig ist und die erste Armatur (2) und die Mittelachse (X) umgibt,
- eine Aufhängung (4), die die erste Armatur (2) mit der zweiten Armatur (3) verbindet, wobei die Aufhängung (4) eine Verbundkonstruktion ist, die ein elastisches Material in Verbindung mit einem Dämpfungsmaterial (7) umfasst,
wobei die Aufhängung (4) relative Schwingungsbewegungen der ersten Armatur (2) gegenüber der zweiten Armatur (3) wenigstens in einer ersten Schwingungsrichtung (Z) senkrecht zur Mittelachse (X) ermöglicht,
wobei das elastische Material ein nicht dämpfendes oder schwach dämpfendes Material ist und eine statische Steifigkeit der Aufhängung bestimmt, wobei das Dämpfungsmaterial (7) dazu geeignetist, durch die Schwingungsbewegungen potenziell angeregte Eigenmodi zu dämpfen,
wobei die Aufhängung (4) eine dynamische Steifigkeit zwischen 400 N/mm und 800 N/mm gegenüber den Schwingungsbewegungen in der ersten Schwingungsrichtung (Z) aufweist, in einem Frequenzbereich der Schwingungsbewegungen von 200 Hz bis 3000 Hz, wobei das Dämpfungsmaterial (7) eine Masse von weniger als 20 % einer Gesamtmasse der schwingungsdämpfenden Stütze (1) aufweist,
wobei die Aufhängung (4) mehrere Aufhängungselemente (5; 15) umfasst, die winklig um die Mittelachse (X) verteilt sind, wobei jedes Aufhängungselement (5; 15) wenigstens einen elastischen Abschnitt (6; 26; 16) aufweist, der das elastische Material enthält und eine Breite (1) parallel zur Mittelachse (X) aufweist, wobei sich der elastische Abschnitt (6; 26; 16) zwischen einem ersten Ende (6a; 26a; 16a), das mit der ersten Armatur (2) verbunden ist, und einem zweiten Ende (6b; 26b; 16b), das mit der zweiten Armatur (3) verbunden ist, erstreckt,
und wobei jedes Aufhängungselement (5; 15) umfasst:
A - entweder einen einzigen elastischen Abschnitt (6; 26) in Form einer Lasche, wobei der elastische Abschnitt (6; 26) jedes Aufhängungselements so angeordnet ist, dass er sich im Wesentlichen spiralförmig zwischen dem ersten Ende (6a; 26a) und dem zweiten Ende (6b; 26b) des elastischen Abschnitts (6; 26),
B - entweder einen einzigen laschenförmigen elastischen Abschnitt (16), wobei der elastische Abschnitt (16) jedes Aufhängungselements zwischen dem ersten und dem zweiten Ende (16a, 16b) gewölbt ist,
C - oder zwei laschenförmige elastische Abschnitte (16), wobei die ersten Enden (16a) der beiden elastischen Abschnitte fest miteinander verbunden sind und die zweiten Enden (16b) der beiden elastischen Abschnitte fest miteinander verbunden sind, wobei die beiden elastischen Abschnitte (16) zwischen den ersten und zweiten Enden (16a, 16b) voneinander weg gebogen sind.

2. Schwingungsdämpfende Stütze (1) nach Anspruch 1, wobei das Dämpfungsmaterial (7) einen Dämpfungsfaktor von mehr als 10 % in einem Temperaturbereich von - 30 °C bis 90 °C und in einem Frequenzbereich der Schwingungsbewegungen von 200 Hz bis 3000 Hz aufweist.

3. Schwingungsdämpfende Stütze (1) nach einem der vorhergehenden Ansprüche, wobei das elastische Material einen Dämpfungsfaktor von weniger als 7 % in dem Temperaturbereich von -30 °C bis 90 °C und in dem Frequenzbereich der Schwingungsbewegungen von 200 Hz bis 3000 Hz aufweist.

4. Schwingungsdämpfende Stütze (1) nach einem der vorhergehenden Ansprüche, wobei das elastische Material einen Elastizitätsmodul von mehr als 5 GPa aufweist.

5. Schwingungsdämpfende Stütze (1) nach einem der vorhergehenden Ansprüche, wobei das elastische Material gewählt ist aus:
- einem metallischen Material mit einem Elastizitätsmodul von mehr als 100 GPa und einem Dämpfungsfaktor von weniger als 0,2 % in dem Temperaturbereich von -30 °C bis 90 °C und in dem Frequenzbereich der Schwingungsbewegungen von 200 Hz bis 3000 Hz;
- einem thermoplastischen Material mit einem Elastizitätsmodul von mehr als 5 GPa und einem Dämpfungsfaktor von weniger als 7 % in dem Temperaturbereich von -30 °C bis 90 °C und in dem Frequenzbereich der Schwingungsbewegungen von 200 bis 3000 Hz aufweist;
- einem Verbundwerkstoff, der Fasern umfasst, die in eine synthetische Harzmatrix eingebettet sind, wobei der Verbundwerkstoff ein Elastizitätsmodul von mehr als 70 GPa und einen Dämpfungsfaktor von weniger als 1 % in dem Temperaturbereich von -30 °C bis 90 °C und in dem Frequenzbereich der Schwingungsbewegungen von 200 Hz bis 3000 Hz aufweist.

6. Schwingungsdämpfende Stütze (1) nach einem der vorhergehenden Ansprüche, wobei das Dämpfungsmaterial (7) wenigstens teilweise auf den elastischen Abschnitt aufgespritzt ist.

7. Schwingungsdämpfende Stütze (1) nach Anspruch 6, wobei das aufgespritzte Dämpfungsmaterial (7) eine Dicke (e) aufweist, die den elastischen Abschnitt (6; 16) bedeckt, wobei die Dicke (e) kleiner ist als L/15, wobei L eine Länge des elastischen Abschnitts (6; 16) zwischen dem ersten Ende (6a; 16a) und dem zweiten Ende (6b; 16b) ist.

8. Schwingungsdämpfende Stütze (1) nach Anspruch 6 oder Anspruch 7, wobei das Dämpfungsmaterial (7) auch auf wenigstens einen Teil der ersten Armatur (2) und/oder der zweiten Armatur (3) aufgespritzt ist.

9. Schwingungsdämpfende Stütze (1) nach Anspruch 8, wobei der elastische Abschnitt (6; 16) einen ersten Abschnitt (6c; 16c) aufweist, in dem das auf den elastischen Abschnitt aufgespritzte Dämpfungsmaterial (7) fest mit der ersten Armatur (2) verbunden ist, einen zweiten Abschnitt (6d; 16d), in dem das den elastischen Abschnitt umspritzende Dämpfungsmaterial frei ist, und einen dritten Abschnitt (6e; 16e), in dem das auf den elastischen Abschnitt aufgespritzte Dämpfungsmaterial fest mit der zweiten Armatur (3) verbunden ist, wobei das umspritzte Dämpfungsmaterial (7) eine Dicke (e) aufweist, die den zweiten Abschnitt (6d; 16d) des elastischen Abschnitts bedeckt, wobei die Dicke (e) kleiner ist als L/30, wobei L eine Länge des elastischen Abschnitts (6; 16) zwischen dem ersten Ende (6a; 16a) und dem zweiten Ende (6b; 16b) ist.

10. Schwingungsdämpfende Stütze (1) nach einem der vorhergehenden Ansprüche, wobei der elastische Abschnitt (6; 16) aus dem elastischen Material besteht.

11. Schwingungsdämpfende Stütze (1) nach einem der Ansprüche 1 bis 9, wobei der elastische Abschnitt (26) zwei parallele elastische Lamellen (27) aus dem elastischen Material aufweist, die durch eine Schicht aus dem Dämpfungsmaterial (7) getrennt sind, das an den beiden elastischen Lamellen (27) haftet.

12. Schwingungsdämpfende Stütze (1) nach Anspruch 11, wobei die Schicht aus dem Dämpfungsmaterial (7) eine Dicke (e1) aufweist, die kleiner ist als L/30, wobei L eine Länge des elastischen Abschnitts zwischen dem ersten Ende und dem zweiten Ende ist.

13. Fahrzeug mit einer Karosserie (CV), einem Antriebsstrang (M) und wenigstens einer schwingungsdämpfenden Stütze (1) nach einem der vorhergehenden Ansprüche, der die Karosserie (CV) mit dem Antriebsstrang (M) verbindet.

14. Fahrzeug nach Anspruch 13, wobei der Antriebsstrang (M) wenigstens einen Elektromotor umfasst.

15. Verfahren zur Herstellung einer schwingungsdämpfenden Stütze (1) nach einem der Ansprüche 1 bis 12, deren Aufhängung (4) wenigstens einen Verbundteil umfasst, der eine thermoplastische oder thermisch aushärtbare, faserverstärkte Matrix umfasst, wobei die Fasern zwischen Umlenkelementen gewickelt und gespannt sind, wobei das Verfahren die Herstellung einer Struktur aus vorimprägnierten oder nicht vorimprägnierten Fasern durch die folgenden Schritte umfasst:
- Ausrichten und Aneinanderlegen der Fasern, wobei diese zwischen Umlenkelementen gespannt und voneinander beabstandet gehalten werden, so dass eine erste Schicht erhalten wird,
- Auflegen einer zweiten Schicht, die auf die gleiche Weise wie die erste Schicht hergestellt wurde, auf die erste Schicht, wobei die Fasern parallel zu denen der ersten Schicht verlaufen und von den Fasern der ersten Schicht beabstandet gehalten werden,
- Wiederholen des Auflegens, bis die gewünschte Dicke erreicht ist.

## Claims

1. Anti-vibration support (1) designed to filter and dampen vibrations between a first element (M) and a second element (CV), said anti-vibration support (1) including:
- a first reinforcement (2) designed to be attached to the first element (M), the first reinforcement (2) extending parallel to a central axis (X),
- a second reinforcement (3) designed to be attached to the second element (CV), the second reinforcement (3) being annular and surrounding said first reinforcement (2) and said central axis (X),
- a suspension (4) connecting the first reinforcement (2) to the second reinforcement (3), said suspension (4) being a composite assembly including an elastic material associated with a damping material (7), said suspension (4) allowing relative vibratory movements of the first reinforcement (2) relative to the second reinforcement (3) at least in a first vibration direction (Z) perpendicular to the central axis (X),
wherein said elastic material is a non-damping or slightly damping material and determines a static stiffness of the suspension,
wherein the damping material (7) is designed to dampen normal modes potentially excited by said vibratory movements,
wherein the suspension (4) has a dynamic stiffness of between 400 N/mm and 800 N/mm with respect to said vibratory movements in the first vibration direction (Z), in a frequency range of said vibratory movements of 200 Hz to 3000 Hz,
wherein said damping material (7) has a mass of less than 20% of a total mass of the anti-vibration support (1),
wherein the suspension (4) includes a plurality of suspension members (5; 15) angularly distributed about the central axis (X), each suspension member (5; 15) having at least one elastic portion (6; 26; 16) including said elastic material and having a width (/) parallel to the central axis (X), said elastic portion (6; 26; 16) extending between a first end (6a; 26a; 16a) connected to the first reinforcement (2) and a second end (6b; 26b; 16b) connected to the second reinforcement (3), and wherein each suspension member (5; 15) includes:
A - either a single tongue-shaped elastic portion (6; 26) and the elastic portion (6; 26) of each suspension member being arranged so as to extend substantially in a spiral between the first end (6a; 26a) and the second end (6b; 26b) of said elastic portion (6; 26),
B - or a single tongue-shaped elastic portion (16) and the elastic portion (16) of each suspension member being curved between the first and second ends (16a, 16b),
C - or two tongue-shaped elastic portions (16), the first ends (16a) of the two elastic portions being integral with one another and the second ends (16b) of the two elastic portions being integral with one another, the two elastic portions (16) being curved away from each another between the first and second ends (16a, 16b).

2. Anti-vibration support (1) according to Claim 1, wherein said damping material (7) has a damping factor greater than 10% in a temperature range of -30°C to 90°C and in a frequency range of said vibratory movements of 200 Hz to 3000 Hz.

3. Anti-vibration support (1) according to any one of the preceding claims, wherein said elastic material has a damping factor of less than 7% in said temperature range of -30°C to 90°C and in said frequency range of said vibratory movements of 200 Hz to 3000 Hz.

4. Anti-vibration support (1) according to any one of the preceding claims, wherein said elastic material has a Young's modulus higher than 5 GPa.

5. Anti-vibration support (1) according to any one of the preceding claims, wherein said elastic material is selected from:
- a metallic material having a Young's modulus higher than 100 GPa and a damping factor lower than 0.2% in said temperature range of -30°C to 90°C and in said frequency range of said vibratory movements of 200 Hz to 3,000 Hz;
- a thermoplastic material having a Young's modulus higher than 5 GPa and a damping factor lower than 7% in said temperature range of -30°C to 90°C and in said frequency range of said vibratory movements of 200 to 3,000 Hz;
- a composite material comprising fibres embedded in a synthetic resin matrix, said composite material having a Young's modulus higher than 70 GPa and a damping factor lower than 1% in said temperature range of -30°C to 90°C and in said frequency range of said vibratory movements of 200 Hz to 3,000 Hz.

6. Anti-vibration support (1) according to any one of the preceding claims, wherein the damping material (7) is at least partially overmoulded over said elastic portion.

7. Anti-vibration support (1) according to Claim 6, wherein the overmoulded damping material (7) has a thickness (e) covering said elastic portion (6; 16), said thickness (e) being smaller than L/15, where L is a length of said elastic portion (6; 16) between said first end (6a; 16a) and said second end (6b; 16b).

8. Anti-vibration support (1) according to Claim 6 or Claim 7, wherein the damping material (7) is also overmoulded over at least part of the first reinforcement (2) and/or of the second reinforcement (3).

9. Anti-vibration support (1) according to Claim 8, wherein said elastic portion (6; 16) comprises a first section (6c; 16c) where the damping material (7) overmoulding said elastic portion is secured to the first reinforcement (2), a second section (6d; 16d) where the damping material overmoulding said elastic portion is free and a third section (6e; 16e) where the damping material overmoulding said elastic portion is secured to the second reinforcement (3), the overmoulded damping material (7) having a thickness (e) covering said second section (6d; 16d) of the elastic portion, said thickness (e) being smaller than L/30, where L is a length of said elastic portion (6; 16) between said first end (6a; 16a) and said second end (6b; 16b).

10. Anti-vibration support (1) according to any one of the preceding claims, wherein said elastic portion (6; 16) is made of said elastic material.

11. Anti-vibration support (1) according to any one of Claims 1 to 9, wherein said elastic portion (26) includes two parallel elastic strips (27) consisting of said elastic material, separated by a layer of said damping material (7) that adheres to the two elastic strips (27).

12. Anti-vibration support (1) according to Claim 11, wherein said layer of said damping material (7) has a thickness (e1) less than L/30, where L is a length of said elastic portion between said first end and said second end.

13. Vehicle including a body (CV), a power unit (M) and at least one anti-vibration support (1) according to any one of the preceding claims connecting the body (CV) to the power unit (M).

14. Vehicle according to Claim 13, wherein the power unit (M) includes at least one electric motor.

15. Method for manufacturing an anti-vibration support (1) according to any one of Claims 1 to 12, the suspension (4) of which includes at least one composite part comprising a fibre-reinforced thermoplastic or thermosetting matrix, said fibres being wound between return elements and tensioned, said method comprising producing a structure of fibres, pre-impregnated or not, through the following operations:
- aligning and juxtaposing the fibres, while tensioning them between return elements, and keeping them apart from each other, so as to obtain a first layer,
- superimposing on said first layer, a second layer obtained identically to the first layer, where the fibres are parallel to those of the first layer, and kept apart from said fibres of the first layer,
- repeating the superimposition operation until the desired thickness is obtained.
